(19) Europäisches Patentamt
European Patent Office
Office européen des brevets

(11) EP 3 307 801 B1

(12) EUROPEAN PATENT SPECIFICATION

(45) Date of publication and mention of the grant of the patent:
**26.05.2021 Bulletin 2021/21**

(21) Application number: **16732415.1**

(22) Date of filing: **09.06.2016**

(51) Int Cl.:
***C08G 18/48*** (2006.01) ***C08G 18/76*** (2006.01)
***C08G 18/18*** (2006.01) ***C08G 18/24*** (2006.01)
***C08G 18/44*** (2006.01) ***C08G 77/46*** (2006.01)
***C08L 83/12*** (2006.01) ***C08G 101/00*** (2006.01)

(86) International application number:
**PCT/US2016/036643**

(87) International publication number:
**WO 2016/201073 (15.12.2016 Gazette 2016/50)**

# (54) SILICONE SURFACTANT FOR USE IN POLYURETHANE FOAMS PREPARED WITH POLYETHER CARBONATE POLYOLS

SILIKONTENSID ZUR VERWENDUNG IN MIT POLYETHERCARBONATPOLYOLEN HERGESTELLTEN POLYURETHANSCHÄUMEN

TENSIOACTIF DE SILICONE DESTINÉ À ÊTRE UTILISÉ DANS DES MOUSSES DE POLYURÉTHANE PRÉPARÉES À L'AIDE DE POLYOLS DE POLY(ÉTHER-CARBONATE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2015 US 201562174154 P**

(43) Date of publication of application:
**18.04.2018 Bulletin 2018/16**

(73) Proprietor: **Momentive Performance Materials Inc.**
**Waterford, NY 12188 (US)**

(72) Inventors:
- **KISS, Antonie Gabriel**
  **50667 Köln (DE)**
- **HEISLER, Ladislau**
  **Marietta, Ohio 45750 (US)**

(74) Representative: **Gille Hrabal Partnerschaftsgesellschaft mbB**
**Patentanwälte**
**Brucknerstraße 20**
**40593 Düsseldorf (DE)**

(56) References cited:
**EP-A1- 1 501 889** **US-A- 5 789 454**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 307 801 B1

## Description

FIELD

The present technology relates to silicone based surfactants for use in polyurethane foams, polyurethane foam compositions comprising such surfactants, and polyurethane foams made from such compositions. In particular, the present technology provides a silicone based surfactant that is suitable for making polyurethane foams, including flexible foams, using polyether carbonate polyols.

BACKGROUND

Polyurethane foams are extensively used in a variety of industrial and consumer applications. The general production of polyurethane foams is well known to those skilled in the art. Polyurethanes are produced from the reaction of isocyanate groups present in polyisocyanates with hydroxyl groups present in polyols. The polyurethane foam production, the reaction of polyisocyanates with polyols, is carried out in the presence of several additives: surfactants, catalysts, cross-linking agents, water, blowing agents, and other additives. Surfactants are typically necessary during the polyurethane foam manufacturing process, and have a significant impact on the final polyurethane foam physical properties. Most conventional type surfactants are based on siloxane/polyether copolymers. Flexible polyurethane foams, a subcategory of the polyurethane foams, are generally soft, less dense, pliable, and subject to structural rebound subsequent to loading.

Polyols used in the production of polyurethanes are typically petrochemical in origin, being generally derived from propylene oxide, ethylene oxide, and various starters such as propylene glycol, glycerin, sucrose, and sorbitol. Polyether polyols are the most common polyols used in polyurethane production. For flexible foams, polyester or polyether polyols with molecular weights of from about 500 to 10,000 are generally used. For instance, US 5789454 A discloses a foam-forming composition comprising a polyether polyol, an organic polyisocyanate, a catalyst, water, dissolved pressurized inert gas serving as a blowing agent and a silicone surfactant with two different sets of polyether pendent groups, wherein the second set has an ethylene oxide content ≥ 70 %, which leads to a fine cell structure foam. EP 1501889 discloses similar foam-forming compositions wherein a surfactant with a total ethylene oxide content of the surfactant structure of less than 37% by weight is applied. These types of polyols contribute to the depletion of petroleum-derived oil, a non-renewable resource.

Thus, in recent years, other polyols have been sought for use in making foams. Vegetable oils based polyols have penetrated a variety of polyurethane applications. Growing consumer demand for "greener" products and the depletion of non-renewable resources have created increasing demand for polyurethane foams produced with renewable content. Derived from renewable resources, vegetable oils based polyols, also known as "natural oil based polyols" (NOP), present an alternative to petroleum-based feedstock. As both polyols suppliers and polyurethane foam producers have recognized this opportunity, NOP are increasingly used in a broad range of polyurethane foams, in combination with petroleum based polyols.

NOP currently used in polyurethane foams are usually based on at least one vegetable oil, including but not limited to soybean, castor, sunflower, canola, linseed, cottonseed, tung, palm, poppy seed, corn and peanut. In one respect, NOP may generally be categorized as hydroxylated vegetable oils or alkoxylated vegetable oils, depending on the extent and the nature of the chemical modifications the vegetable oils are subjected to. These are commercially available from various manufacturers.

Polyether carbonate polyols have also been proposed as an alternative polyol to the petroleum-based polyols. Polyether carbonate polyols are made by copolymerizing a starter molecule (propylene glycol, glycerin, sucrose and sorbitol) with carbon dioxide and an alkylene oxide, resulting in polyol with incorporated carbon dioxide content from 1 wt% to about 40 wt%. The use of petroleum-based polyols in polyurethane foams is a well-established technology that has created products with strict industry requirements. The attempt to partially or totally substitute them with NOP or polyether carbonate polyols in the manufacturing of polyurethane foams has, however, resulted in loss of product quality. This is especially true in the case of flexible polyurethane foams, where increasing incorporation of NOP or polyether carbonate polyol has a negative impact on the physical properties of the foam.

SUMMARY

The present technology relates to silicone surfactants for use in polyurethane foams. More particularly, the present embodiments relate to silicone surfactants having dimethyl siloxane backbones with attached alkyl and polyether pendant groups that provide improved properties for flexible urethane foam compositions utilizing polyether carbonate polyols.

The present technology employs a silicone based surfactant having high molecular weight and low molecular

weight polyether pendant groups, where the low molecular weight polyether pendant groups have a high ethylene oxide content. In embodiments, the low molecular weight polyether pendant groups have an ethylene oxide content of 70 weight percent of the alkylene oxide content or greater. It has been found that a foam forming composition comprising such surfactants can employ a substantial amount a polyether carbonate polyol as the polyol component. Using such surfactants allows for at least half and possibly all of the polyol in the composition to be a polyether carbonate polyol. These compositions can provide stable flexible foams with good properties.

In one aspect, the present technology provides, a foam forming composition comprising (a) a polyol comprising a polyether carbonate polyol; (b) an organic polyisocyanate or polyisocyanate prepolymer; (c) a catalyst for the production of polyurethane foams; (d) a blowing agent; and (e) a silicone surfactant, the silicone surfactant comprising a first set of polyether pendant groups having a first molecular weight, and a second set of polyether pendent groups having a second molecular weight, the second molecular weight being lower than the first molecular weight, wherein the second set of polyether pendant groups have an ethylene oxide content of 70 weight percent or greater of the alkylene oxide content of the polyether.

In one embodiment, the second set of polyether pendant groups have an ethylene oxide content of 70 to 100 weight percent of the alkylene oxide content of the polyether.

In one embodiment of the foam forming composition of any previous embodiment, the second set of polyether pendant groups have an ethylene oxide content of 100%.

In one embodiment of the foam forming composition of any previous embodiment, the second set of polyether pendant groups have a blend average molecular weight of from 130 to 1000 grams/mole.

In one embodiment of the foam forming composition of any previous embodiment, the second set of polyether pendant groups have a blend average molecular weight of from 400 to 600 grams/mole.

In one embodiment of the foam forming composition of any previous embodiment, the silicone surfactant is of the formula:

$$MD_xD'_yM$$

wherein M is independently $R(CH_2)_2\ SiO_{½}$ - or $(CH_3)_3SiO_{½}$-; D is - $O_{½}Si(CH_3)_2O_{½}$-; D' is chosen from a group of the formula:

$$-O_{½}Si(CH_3)R^1O_{½}-$$

; and/or

$$-O_{½}Si(CH_3)R^2O_{½}-$$

where $R^1$ and $R^2$ are polyalkylene oxide polyethers of the formula

$$-B-C_nH_{2n}O-(C_2H_4O)_e-(C_3H_6O)_f-Z$$

where:

- $R^1$ has a blend average molecular weight in the range of from 1500 to 6000 grams/mole; n is 3-4; e is a number such that the ethylene oxide (EO) is from 30 to 50 weight percent of the alkylene oxide content of the polyether; f is a number such that the propylene oxide residues constitute 50 to 70 weight percent of the alkylene oxide content of the polyether;
- $R^2$ has a blend average molecular weight in the range of from 130 to 1000 grams/mole; n is 3-4; e is a number such that the ethylene oxide content is from 70 to 100 weight percent of the alkylene oxide content of the polyether; f is a number such that the propylene oxide content is from 0 to 30 weight percent of the alkylene oxide content of the polyether;
- R is alkyl, aryl or R', where R' comprises an acetoxy capped polyether
- B is derived from a moiety capable of undergoing hydrosilation;
- Z is independently chosen from hydrogen, a $C_1$-$C_8$ alkyl or aralkyl moietie, -C(O)$Z^1$, - C(O)O$Z^1$, and -C(O)NH$Z^1$, where $Z^1$ represents mono-functional $C_1$-$C_8$ alkyl or $C_6$-$C_{12}$ aryl moieties;
- x is 40 to 150; y is 5 to 40; $x/y \leqq 15$; and
- D' comprises at least one $-O_{½}Si(CH_3)R^2O_{½}-$ group.

In one embodiment of the foam forming composition of any previous embodiment, the silicone surfactant is a silicone polymer of the formula:

$$R^3\text{-}Si(CH_3)_2O\text{-}(Si(CH_3)_2O\text{-})_x\text{-}(SiCH_3R^4O\text{-})_a\text{-}(SiCH_3R^5O\text{-})_b\text{-}(SiCH_3R^6O\text{-})_c\text{-}Si(CH_3)_2\text{-}R^3$$

where $R^4$, $R^5$, and $R^6$ are polyalkylene oxide polyethers of the formula

$$\text{-}B\text{-}C_nH_{2n}O\text{-}(C_2H_4O)_e\text{-}(C_3H_6O)_f\text{-}(C_4H_8O)_g\text{-}Z,$$

$R^4$ has a blend average molecular weight in the range of from 3000 to 6000 grams/mole and ethylene oxide (EO) is from 20 to 60 weight percent of the alkylene oxide content of the polyether;
$R^5$ has a blend average molecular weight in the range of from 1100 to 2900 grams/mole and ethylene oxide is from 20 to 60 weight percent of the alkylene oxide content of the polyether;
$R^6$ has a blend average molecular weight in the range of from 130 to 1000 grams/mole and ethylene oxide is from 70 to 100 weight percent of the alkylene oxide content of the polyether;
B is derived from a moiety capable of undergoing hydrosilation;
Z is selected from the group consisting of hydrogen, $C_1$-$C_8$ alkyl or aralkyl moieties, - $C(O)Z^1$, $-C(O)OZ^1$, and $-C(O)NHZ^1$, where $Z^1$ represents mono-functional $C_1$-$C_8$ alkyl or aryl moieties;
each $R^3$ is independently chosen from an alkyl, an aryl, an aralkyl, $R^4$, $R^5$, and $R^6$;
x is 40 to 150;
y is 5 to 40 and equals a+b+c, where b may be 0, c is greater than 0, and a+b > 0; $x/y \leq 15$; $n \leq 4$; and e, f, and g are independently selected to have any value such that the defined weight percent of EO and molecular weight required by the polyether are met.

In one embodiment of the foam forming composition of any previous embodiment, the polyol (a) comprises the polyether carbonate polyol in an amount of 50 % or greater by weight of the polyol.
In one embodiment of the foam forming composition of any previous embodiment, the polyol (a) comprises the polyether carbonate polyol in an amount of 70 % or greater by weight of the polyol.
In one embodiment of the foam forming composition of any previous embodiment, the polyol (a) comprises the polyether carbonate polyol in an amount of from 60 % to 90 % by weight of the polyol.
In one embodiment of the foam forming composition of any previous embodiment, the polyol (a) comprises the polyether carbonate polyol in an amount of 100 % by weight of the polyol.
In one embodiment of the foam forming composition of any previous embodiment, the surfactant (e) is present in an amount of 0.1 to 5 parts per hundred parts polyol.
In another aspect, the present technology provides a process for producing a polyurethane foam comprising reacting the foam forming composition of any previous embodiment.
In still another aspect, the present technology provides a polyurethane foam formed from the foam forming compositions of any previous embodiment.

## DETAILED DESCRIPTION

In one aspect, the present invention provides a foam forming composition comprising (a) a polyol comprising a polyether carbonate polyol; (b) an organic polyisocyanate or polyisocyanate prepolymer; (c) at least one catalyst for the production of polyurethane foams; (d) at least one blowing agent; and (e) a silicone surfactant. The silicone surfactant comprises a silicone-based polymer surfactant comprising polyether based groups pendant to a silicon atom in the backbone of the silicone-based polymer. By controlling the polyether groups in terms of their molecular weight and/or ethylene oxide content, it has been found that a polyurethane foam composition can be provided using polyether carbonate polyols to make flexible foams having good properties.
The silicone surfactant suitable for use in the present invention may be referred to as a "comb-type" silicone polymer and comprise polyether groups pendant to the silicon atoms in the polymer backbone. In particular, the surfactant comprises both low molecular weight polyether pendant groups and high molecular weight polyether pendant groups, where the low molecular weight polyether pendant groups have a high ethylene oxide content.
In one embodiment, the surfactant is a polymer of the formula:

$$MD_xD'_yM$$

wherein M is independently $R(CH_2)_2SiO_{½}$- or $(CH_3)_3SiO_{½}$-; D is $-O_{½}Si(CH_3)_2O_{½}$-; D' is $-O_{½}Si(CH_3)R'O_{½}$-; x is 40 to 150; y is 5 to 40; $x/y \leqq 15$; R is alkyl, aryl or R'; and R' comprises an acetoxy capped polyether. The surfactant comprises at least two different D' groups having different polyethers from one another with one of the polyether branches having

≧ 70% by weight ethylene oxide content. The surfactant has a target average molecular weight of 12,000 to 35,000 Daltons. In one embodiment, the surfactant comprises two different polyether groups. In one embodiment, the surfactant comprises three different capped polyether groups. In one embodiment, the target average molecular weight is from 20,000 to 30,000 Daltons; from 22,000 to 28,000 Dalton; even from 24,000 to 26,000 Daltons. In embodiments, the target average molecular weight is 12,000 to 20,000 Daltons; even 12,000 to 15,000 Daltons.

In one embodiment, the D' group is chosen from a group of the formula:

$$-O_{½}Si(CH_3)R^1O_{½}-;$$

and/or

$$-O_{½}Si(CH_3)R^2O_{½}-$$

where $R^1$ and $R^2$ are polyalkylene oxide polyethers of the formula

$$-B-C_nH_{2n}O-(C_2H_4O)_e-(C_3H_6O)_f-Z$$

where:

$R^1$ has a blend average molecular weight in the range of from 1500 to 6000 grams/mole; n is 3-4; e is a number such that the ethylene oxide (EO) is from 30 to 50 weight percent of the alkylene oxide content of the polyether; f is a number such that the propylene oxide residues constitute 50 to 70 weight percent of the alkylene oxide content of the polyether;

$R^2$ has a blend average molecular weight in the range of from 130 to 1000 grams/mole; n is 3-4; e is a number such that the ethylene oxide content is from 70 to 100 weight percent of the alkylene oxide content of the polyether; f is a number such that the propylene oxide content is from 0 to 30 weight percent of the alkylene oxide content of the polyether;

B is derived from a moiety capable of undergoing hydrosilation;

Z is independently chosen from hydrogen, $C_1$-$C_8$ alkyl or aralkyl moieties, -C(O)$Z^1$, - C(O)O$Z^1$, and -C(O)NH$Z^1$ where $Z^1$ represents mono-functional $C_1$-$C_8$ alkyl or $C_6$-$C_{12}$ aryl moieties; and

D' comprises at least one $-O_{½}Si(CH_3)R^2O_{½}-$ group.

As described above, M may be a $R(CH_2)_2SiO_{½}$- group, where R may optionally be an acetoxy capped polyether, R'. The acetoxy capped polyether R' may be independently chosen from the polyalkylene oxide polyethers $R^1$ and $R^2$. In embodiments, the surfactant comprises one M group with a polyalkylene oxide group. In one embodiment, the M group comprises a polyalkylene oxide polyether chosen from $R^1$. In on embodiment, the M group comprises a polyalkylene oxide group chosen from $R^2$. In embodiments, each M group comprises a polyalkylene oxide group. In one embodiment, one M group comprises a polyalkylene oxide chosen from $R^1$, and one M group comprises a polyalkylene oxide chosen from $R^2$. In one embodiment, each M group comprises a polyalkylene oxide chosen from $R^1$. In one embodiment, each M group comprises a polyalkylene oxide chosen from $R^2$. When each M group comprises a $R^1$ or $R^2$ group, the groups may be the same or different from one another.

In one embodiment, $R^1$ has a blend average molecular weight in the range of from 2000 to 5000 grams/mole; n is 3-4; e is a number such that the ethylene oxide (EO) is from 35 to 45 weight percent of the alkylene oxide content of the polyether; f is a number such that the propylene oxide residues constitute 50 to 70 weight percent of the alkylene oxide content of the polyether; and $R^2$ has a blend average molecular weight in the range of from 250 to 750 grams/mole; n is 3-4; e is a number such that the ethylene oxide content is from 70 to 100 weight percent of the alkylene oxide content of the polyether; f is a number such that the propylene oxide content is from 0 to 30 weight percent of the alkylene oxide content of the polyether. In one embodiment, $R^2$ has a blend average molecular weight in the range of from 250 to 750 grams/mole; from 300 to 700 grams/mole; even from 400 to 600 grams/mole.

In one embodiment, the silicone surfactant is a silicone polymer of the formula:

$$R^3-Si(CH_3)_2O-(Si(CH_3)_2O-)_x-(SiCH_3R^4O-)_a-(SiCH_3R^5O-)_b-(SiCH_3R^6O-)_c-Si(CH_3)_2-R^3$$

where $R^4$, $R^5$, and $R^6$ are polyalkylene oxide polyethers of the formula

$$-B-C_nH_{2n}O-(C_2H_4O)_e-(C_3H_6O)_f-(C_4H_8O)_g-Z,$$

$R^4$ has a blend average molecular weight in the range of from 000 to 6000 grams/mole and ethylene oxide (EO) is from 20 to 60 weight percent of the alkylene oxide content of the polyether;
$R^5$ has a blend average molecular weight in the range of from 1100 to 2900 grams/mole and ethylene oxide is from 20 to 60 weight percent of the alkylene oxide content of the polyether;
$R^6$ has a blend average molecular weight in the range of from 130 to 1000 grams/mole and ethylene oxide is from 70 to 100 weight percent of the alkylene oxide content of the polyether;
B is derived from a moiety capable of undergoing hydrosilation;
Z is selected from the group consisting of hydrogen, $C_1$-$C_8$ alkyl or aralkyl moieties, - $C(O)Z^1$, $-C(O)OZ^1$, and $-C(O)NHZ^1$, where $Z^1$ represents mono-functional $C_1$-$C_8$ alkyl or aryl moieties;
each $R^3$ is independently chosen from an alkyl, an aryl, an aralkyl, $R^4$, $R^5$, and $R^6$;
x is 40 to 150;
y is 5 to 40 and equals a+b+c, where b may be 0, c is greater than 0, and a+b > 0; $x/y \leq 15$; $n \leq 4$; and e, f, and g are independently selected to have any value such that the defined weight percent of EO and molecular weight required by the polyether are met.

The $R^4$ moieties may comprise from 30 to 55% by weight of EO; from 35 to 50% by weight of EO; even 40 to 50% of EO. In one embodiment, $R^4$ comprises 40% EO. The $R^4$ moieties may have a BAMW greater than 3500 Daltons and, in one embodiment, greater than 4000 Daltons. In one embodiment, the $R^4$ moieties have a BAMW of from 3500 to 5000 Daltons in one embodiment from 4000 to 4500 Dalton. The $R^5$ moieties may have from 30 to 55% by weight of EO; from 35 to 50% by weight of EO; even 40 to 50% of EO. In one embodiment, $R^5$ comprises 40% EO. The $R^5$ moieties may have a BAMW in the range of from 1000 to 2500 Daltons; from 1100 to 2300 Daltons; from 1200 to 2000 Daltons; from 1300 to 1800 Daltons. In one embodiment, 1400 to 1600 Daltons. The $R^6$ moieties range from 70 up to 100% by weight of EO; from 75 to 95% by weight of EO; even from 80 to 90% by weight of EO. In one embodiment, $R^6$ comprises from 70 to 80% EO. The $R^6$ moieties may have a BAMW in the range of from 250 to 750 Daltons; from 300 to 700 Daltons; even from 400 to 600 Daltons.

There may also be more than one different polyether from each group. For example, a copolymer may comprise (a) two $R^4$-type polyethers differing in molecular weight and/or EO-content, e.g., 55% EO of 4000 MW and 44% EO of 5500 MW, and (b) an $R^6$-type polyether. In addition, butylene oxide can be substituted for propylene oxide in the polyether backbone. The polyether moieties can be linear or branched and can contain any number of carbon atoms.

The alkyl pendant groups, $R^3$, can be $C_1$-$C_{12}$ substituted or unsubstituted alkyl groups, $C_6$-$C_{12}$ aryl groups, or $C_6$-$C_{12}$ alkaryl groups. In one embodiment, Z is $-C(O)CH_3$ or $CH_3$. B may be an allyl derivative, e.g., propyl, or a methallyl derivative, e.g., isobutyl.

In accordance with the present invention, the silicone surfactants have a x/y ratio of less than or equal to 15. In one embodiment, the x/y ratio is 2 to 15; 3 to 10; 4 to 7; 4 to 6. The ratio of x/y includes all whole number and fractional ratios. Here as elsewhere in the specification and claims, numerical values may be combined to form new and non-disclosed ranges.

As described herein, the value "y" is the sum of a+b+c. It will be appreciated that the surfactant can comprise any combination of these units with the proviso that c is not 0 (i.e., the surfactant comprises at least one c unit) and a+b>0. In one embodiment, the silicone surfactant comprises a, b, and d units.

The surfactant can be used in the polyurethane foam-forming compositions at a concentration of from 0.1 to 5 pphp, more particularly in an amount of from 0.1 to 3 pphp and even more particularly in an amount of from 0.6 to 2 pphp, where pphp means parts per hundred parts polyol.

The surfactant can be provided as a surfactant composition comprising the surfactant and a diluent. The concentration of the surfactant in the surfactant composition can be selected as desired for a particular purpose or intended use. In one embodiment, the surfactant concentration in the surfactant composition can be from 10 % to 50 % by weight of the surfactant composition, more particularly from 15% to 75%, and even more particularly from 20% to 50% by weight, based upon the weight of the surfactant composition.

The polyol (a) component comprises a polyether carbonate polyol. Polyether carbonate polyols are derived from an H-functional starter or initiator (e.g., a monofunctional or polyhydric alcohols), an alkylene oxide, and carbon dioxide. The polyether carbonate is not particularly limited and can be chosen from any suitable polyether carbonate as desired for a particular purpose or intended application.

The polyether carbonate polyols may have a functionality of at least 1, at least 2, even at least 4. In embodiments, the polyether carbonate polyol has a functionality of from 1 to 8, from 2 to 8, from 2 to 6, and even from 2 to 4. The molecular weight may be from 400 to 10,000 g/mol, even from 500 to 6000 g/mol. The polyether carbonate polyol may comprise from 1% to 40% by weight of carbon dioxide; from 5% to 30% by weight of carbon dioxide; from 10% to 25% by weight of carbon dioxide; even from 15% to 20% by weight of carbon dioxide.

Again, the polyether carbonate polyol is not particularly limited. In embodiments, the polyether carbonate polyol may be a compound of the formula:

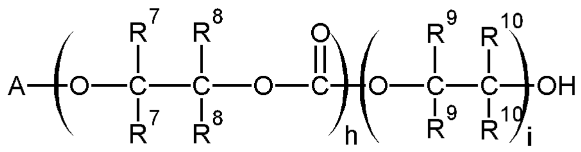

where each occurrence of $R^7$, $R^8$, $R^9$, and $R^{10}$ is independently chosen from hydrogen, a halogen, a C1-C10 alkyl, and a C6-C30 aryl; and A represents a residue from an H-functional starter substance. In embodiments, each occurrence of $R^7$, $R^8$, $R^9$, and $R^{10}$ is hydrogen.

In embodiments, alkylene oxides having from 2 to 24 carbon atoms can be used to form the polyether carbonate polyol. Alkylene oxides having from 2 to 24 carbon atoms are, for example, one or more compounds selected from the group consisting of ethylene oxide, propylene oxide, 1-butene oxide, 2,3-butene oxide, 2-methyl-1,2-propene oxide (isobutene oxide), 1-pentene oxide, 2,3-pentene oxide, 2-methyl-1,2-butene oxide, 3-methyl-1,2-butene oxide, 1-hexene oxide, 2,3-hexene oxide, 3,4-hexene oxide, 2-methyl-1,2-pentene oxide, 4-methyl-1,2-pentene oxide, 2-ethyl-1,2-butene oxide, 1-heptene oxide, 1-octene oxide, 1-nonene oxide, 1-decene oxide, 1-undecene oxide, 1-dodecene oxide, 4-methyl-1,2-pentene oxide, butadiene monoxide, isoprene monoxide, cyclopentene oxide, cyclohexene oxide, cycloheptene oxide, cyclooctene oxide, styrene oxide, methyl styrene oxide, pinene oxide, mono- or poly-epoxidised fats as mono-, di- and tri-glycerides, epoxidised fatty acids, $C_1$-$C_{24}$-esters of epoxidised fatty acids, epichlorohydrin, glycidol and derivatives of glycidol such as, for example, methyl glycidyl ether, ethyl glycidyl ether, 2-ethylhexyl glycidyl ether, allyl glycidyl ether, glycidyl methacrylate as well as epoxide-functional alkyloxysilanes such as, for example, 3-glycidyloxypropyltrimethoxysilane, 3-glycidyloxypropyltriethoxysilane, 3-glycidyloxypropyltripropoxysilane, 3-glycidyloxypropyl-methyl-dimethoxysilane, 3-glycidyloxypropyl-ethyldiethoxysilane, 3-glycidyloxypropyltriisopropoxysilane. Ethylene oxide and/or propylene oxide, in particular propylene oxide, are preferably used as the alkylene oxides.

Suitable H-functional starter substances to form the polyether carbonate may be chosen from a compound having H atoms active for the alkoxylation. Groups that have active H atoms and which are active for the alkoxylation are, for example, -OH, -$NH_2$ (primary amines), -NH- (secondary amines), -SH and -$CO_2H$; -OH is particularly suitable. In embodiments, the H-functional starter substance may be, for example, one or more compounds selected from mono- or poly-hydric alcohols, mono- or poly-valent amines, polyvalent thiols, carboxylic acids, aminoalcohols, aminocarboxylic acids, thioalcohols, hydroxy esters, polyether polyols, polyester polyols, polyester ether polyols, polyether carbonate polyols, polycarbonate polyols, polycarbonates, polyethyleneimines, polyether amines (e.g. so-called Jeffamine® from Huntsman, such as, for example, D-230, D-400, D-2000, T-403, T-3000, T-5000 or corresponding products from BASF, such as, for example, polyether amine D230, D400, D200, T403, T5000), polytetrahydrofurans (e.g. PolyTHF® from BASF, such as, for example, PolyTHF® 250, 650S, 1000, 1000S, 1400, 1800, 2000), polytetrahydrofuranamines (BASF product polytetrahydrofuranamine 1700), polyether thiols, polyacrylate polyols, castor oil, the mono- or di-glyceride of ricinoleic acid, monoglycerides of fatty acids, chemically modified mono-, di- and/or tri-glycerides of fatty acids, and $C_1$-$C_{24}$-alkyl fatty acid esters that contain on average at least 2 OH groups per molecule. The $C_1$-$C_{24}$-alkyl fatty acid esters that contain on average at least 2 OH groups per molecule are, for example, commercial products such as Lupranol Balance® (BASF AG), Merginol® types (Hobum Oleochemicals GmbH), Sovermol® types (Cognis Deutschland GmbH & Co. KG) and Soyol®™ types (USSC Co.).

Suitable monofunctional starter substances include, for example, alcohols, amines, thiols and carboxylic acids. Suitable monofunctional alcohols include: methanol, ethanol, 1-propanol, 2-propanol, 1-butanol, 2-butanol, tert-butanol, 3-buten-1-ol, 3-butyn-1-ol, 2-methyl-3-buten-2-ol, 2-methyl-3-butyn-2-ol, propargyl alcohol, 2-methyl-2-propanol, 1-tert-butoxy-2-propanol, 1-pentanol, 2-pentanol, 3-pentanol, 1-hexanol, 2-hexanol, 3-hexanol, 1-heptanol, 2-heptanol, 3-heptanol, 1-octanol, 2-octanol, 3-octanol, 4-octanol, phenol, 2-hydroxybiphenyl, 3-hydroxybiphenyl, 4-hydroxybiphenyl, 2-hydroxypyridine, 3-hydroxypyridine, 4-hydroxypyridine. Suitable monofunctional amines include: butylamine, tert-butylamine, pentylamine, hexylamine, aniline, aziridine, pyrrolidine, piperidine, morpholine. Suitable monofunctional thiols include, but are not limited to: ethanethiol, 1-propanethiol, 2-propanethiol, 1-butanethiol, 3-methyl-1-butanethiol, 2-butene-1-thiol, thiophenol. Suitable monofunctional carboxylic acids include: formic acid, acetic acid, propionic acid, butyric acid, fatty acids such as stearic acid, palmitic acid, oleic acid, linoleic acid, linolenic acid, benzoic acid, acrylic acid.

Polyhydric alcohols suitable as H-functional starter substances are, for example, dihydric alcohols (such as, for example, ethylene glycol, diethylene glycol, propylene glycol, dipropylene glycol, 1,3-propanediol, 1,4-butanediol, 1,4-butenediol, 1,4-butynediol, neopentyl glycol, 1,5-pentanediol, methylpentanediols (such as, for example, 3-methyl-1,5-pentanediol), 1,6-hexanediol; 1,8-octanediol, 1,10-decanediol, 1,12-dodecanediol, bis-(hydroxymethyl)-cyclohexanes (such as, for example, 1,4-bis-(hydroxymethyl)cyclohexane), triethylene glycol, tetraethylene glycol, polyethylene glycols, dipropylene glycol, tripropylene glycol, polypropylene glycols, dibutylene glycol and polybutylene glycols); trihydric alcohols (such as, for example, trimethylolpropane, glycerol, trishydroxyethyl isocyanurate, castor oil); tetrahydric alcohols (such as, for example, pentaerythritol); polyalcohols (such as, for example, sorbitol, hexitol, sucrose, starch, starch hydrolysates, cellulose, cellulose hydrolysates, hydroxy-functionalised fats and oils, in particular castor oil), as

well as all modification products of the above-mentioned alcohols with different amounts of ε-caprolactone.

The H-functional starter substances can also be selected from the substance class of the polyether polyols, in particular those having a molecular weight Mn in the range from 100 to 4000 g/mol. Preference is given to polyether polyols that are composed of repeating ethylene oxide and propylene oxide units, preferably having a content of from 35 to 100% propylene oxide units, particularly preferably having a content of from 50 to 100% propylene oxide units. The polyether polyol starter substance may be chosen from random copolymers, gradient copolymers, alternating or block copolymers of ethylene oxide and propylene oxide. Suitable polyether polyols composed of repeating propylene oxide and/or ethylene oxide units include, for example, the Desmophen®, Acclaim®, Arcol®, Baycoll®, Bayfill®, Bayflex®, Baygal®, PET® and polyether polyols from Covestro (such as, for example, Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Further suitable homo-polyethylene oxides are, for example, the Pluriol® E brands from BASF SE, suitable homo-polypropylene oxides are, for example, the Pluriol® P brands from BASF SE, suitable mixed copolymers of ethylene oxide and propylene oxide are, for example, the Pluronic® PE or Pluriol® RPE brands from BASF SE.

The H-functional starter substances can also be selected from the substance class of the polyester polyols, in particular those having a molecular weight Mn in the range from 200 to 4500 g/mol. At least difunctional polyesters are used as polyester polyols. Polyester polyols may consist of alternating acid and alcohol units. Suitable acid components may comprise, for example, succinic acid, maleic acid, maleic anhydride, adipic acid, phthalic anhydride, phthalic acid, isophthalic acid, terephthalic acid, tetrahydrophthalic acid, tetrahydrophthalic anhydride, hexahydrophthalic anhydride or mixtures of the mentioned acids and/or anhydrides. Suitable alcohol components may comprise, for example, ethanediol, 1,2-propanediol, 1,3-propanediol, 1,4-butanediol, 1,5-pentanediol, neopentyl glycol, 1,6-hexanediol, 1,4-bis-(hydroxymethyl)-cyclohexane, diethylene glycol, dipropylene glycol, trimethylolpropane, glycerol, pentaerythritol or mixtures of the mentioned alcohols. If divalent or polyvalent polyether polyols are used as the alcohol component, polyester ether polyols which can likewise be used as starter substances for the preparation of the polyether carbonate polyols are obtained. In embodiments, polyether polyols with Mn=from 150 to 2000 g/mol are used for the preparation of the polyester ether polyols.

Polycarbonate diols can further be used as H-functional starter substances, in particular polycarbonate diols having a molecular weight Mn in the range from 150 to 4500 g/mol, preferably from 500 to 2500 g/mol, which are prepared, for example, by reaction of phosgene, dimethyl carbonate, diethyl carbonate or diphenyl carbonate and difunctional alcohols or polyester polyols or polyether polyols. Examples of polycarbonates are to be found, for example, in EP-A 1359177. Examples of suitable polycarbonate diols include the Desmophen® C types from Bayer MaterialScience AG, such as, for example, Desmophen® C 1100 or Desmophen® C 2200.

In a further embodiment of the invention, polyether carbonate polyols can be used as the H-functional starter substances.

The H-functional starter substances generally have a functionality (i.e. number of H atoms active for the polymerisation per molecule) of from 1 to 8, preferably 2 or 3. The H-functional starter substances are used either individually or in the form of a mixture of at least two H-functional starter substances.

Suitable H-functional starter substances are alcohols of the general formula (II)

$$HO\text{-}(CH_2)_h\text{-}OH \qquad (II)$$

wherein h is a number from 1 to 20, preferably an even number from 2 to 20. Examples of alcohols according to formula (II) are ethylene glycol, 1,4-butanediol, 1,6-hexanediol, 1,8-octanediol, 1,10-decanediol and 1,12-dodecanediol. Further examples of H-functional starter substances are neopentyl glycol, trimethylolpropane, glycerol, pentaerythritol, reaction products of the alcohols according to formula (II) with ε-caprolactone, for example reaction products of trimethylolpropane with ε-caprolactone, reaction products of glycerol with ε-caprolactone, as well as reaction products of pentaerythritol with ε-caprolactone. Still other examples of H-functional starter substances are diethylene glycol, dipropylene glycol, castor oil, sorbitol, and polyether polyols composed of repeating polyalkylene oxide units.

Particularly suitable H-functional starter substances include, but are not limited to, one or more compounds selected from the group consisting of ethylene glycol, propylene glycol, 1,3-propanediol, 1,3-butanediol, 1,4-butanediol, 1,5-pentanediol, 2-methyl-1,3-propanediol, neopentyl glycol, 1,6-hexanediol, 1,8-octanediol, diethylene glycol, dipropylene glycol, glycerol, trimethylolpropane, di- and tri-functional polyether polyols, the polyether polyol being composed of a di- or tri-H-functional starter substance and propylene oxide or of a di- or tri-H-functional starter substance, propylene oxide and ethylene oxide. The polyether polyols may have a molecular weight Mn in the range from 62 to 4500 g/mol and a functionality of from 2 to 3, and in particular a molecular weight Mn in the range from 62 to 3000 g/mol and a functionality of from 2 to 3.

The preparation of the polyether carbonate polyols is carried out by catalytic addition of carbon dioxide and alkylene oxides to H-functional starter substances. The term "H-functional" is understood as being the number of H

atoms active for the alkoxylation per molecule of the starter substance.

The polyether carbonate polyol may comprise up to 100% of the polyol component (a). In embodiments, the polyol component (a) comprises the polyether carbonate polyol in an amount of 50% or greater by weight of the polyol; 60% or greater by weight of the polyol; 70% or greater by weight of the polyol; 80% or greater by weight of the polyol; 90% or greater by weight of the polyol; even 95% or greater by weight of the polyol. In embodiments, the polyol component (a) comprises the polyether carbonate polyol in an amount of from 50% to 100% by weight of the polyol (a); from 60% to 90% by weight of the polyol (a); even from 70% to 80% by weight of the polyol (a).

In embodiments where the polyol (a) comprises less than 100% of polyether carbonate polyol, the balance of the polyol may be from any polyol as desired. The polyol is normally a liquid polymer possessing hydroxyl groups. The term "polyol" includes linear and branched polyethers (having ether linkages), polyesters and blends thereof, and comprising at least two hydroxyl groups. In one embodiment, the polyol can be at least one of the types generally used to prepare polyurethane foams. A polyether polyol having a weight average molecular weight of from 1000 to 10000 is particularly useful. In one embodiment, the polyether polyol has a weight average molecular weight of from 2000 to 8000; from 3000 to 6000; even from 4000 to 5000.

Polyols containing reactive hydrogen atoms generally employed in the production of high-resilience polyurethane foams can be employed in the formulations of the present invention. The polyols are hydroxy-functional chemicals or polymers covering a wide range of compositions of varying molecular weights and hydroxy functionality. These polyhydroxyl compounds are generally mixtures of several components although pure polyhydroxyl compounds, i.e. individual compounds, can in principle be used.

Representative polyols that may be used in conjunction with a polyether carbonate polyol include, but are not limited to, polyether polyols, polyester polyols, polyetherester polyols, polyesterether polyols, polybutadiene polyols, acrylic component-added polyols, acrylic component-dispersed polyols, styrene-added polyols, styrene-dispersed polyols, vinyl-added polyols, vinyl-dispersed polyols, urea-dispersed polyols, polyoxypropylene polyether polyol, mixed poly (oxyethylene/oxypropylene) polyether polyol, polybutadienediols, polyoxyalkylene diols, polyoxyalkylene triols, polytetramethylene glycols, polycaprolactone diols and triols, all of which possess at least two primary hydroxyl groups.

Some specific, non-limiting examples of polyether polyols include, polyoxyalkylene polyol, particularly linear and branched poly(oxyethylene)glycol, poly(oxypropylene)glycol, copolymers of the same and combinations thereof. Non-limiting examples of modified polyether polyols include polyoxypropylene polyether polyol into which is dispersed poly(styrene acrylonitrile) or polyurea, and poly(oxyethylene/oxypropylene) polyether polyols into which is dispersed poly(styrene acrylonitrile) or polyurea.

In one embodiment the polyether polyol is chosen from ARCOL® polyol 1053, ARCOL® E-743, Hyperlite® E-848 from Bayer AG, Voranol® from Dow BASF, Stepanpol®. from Stepan, Terate® from Invista, or combinations of two or more thereof.

The hydroxyl number of a polyol is the number of milligrams of potassium hydroxide required for the complete hydrolysis of the fully acrylated derivative prepared from one gram of polyol. The hydroxyl number is also defined by the following equation, which reflects its relationship with the functionality and molecular weight of the polyol:

$$\text{OH No.}=(56.1 \times 1000 \times f)/\text{M.W.}$$

wherein OH is the hydroxyl number of the polyol; f is the average functionality, that is, average number of hydroxyl groups per molecule of the polyether polyol; and M.W. is the number average molecular weight of the polyether polyol. The average number of hydroxyl groups in the polyether polyol is achieved by control of the functionality of the initiator or mixture of initiators used in producing the polyether polyol.

In one embodiment, the polyol can have a functionality of from 2 to 6; from 3 to 5; even 4.

In one embodiment, the polyurethane foam-forming composition comprises a polyether polyol having a hydroxyl number of from 10 to 3000, more particularly from 20 to 2000 even more particularly from 30 to 1000 and still even more particularly from 35 to 800.

The polyisocyanate (b) can include any organic compound containing at least two isocyanate groups that can be used for production of polyurethane foam. In one embodiment, the polyisocyanate can be an organic compound that comprises at least two isocyanate groups and generally will be any known or later discovered aromatic or aliphatic polyisocyanates.

In one embodiment, the polyisocyanate can be a hydrocarbon diisocyanate, including alkylenediisocyanate and arylene diisocyanate.

Representative and non-limiting examples of polyisocyanates include toluene diisocyanate, diphenylmethane isocyanate, polymeric versions of toluene diisocyanate and diphenylmethane isocyanate, methylene diphenyl diisocyanate (MDI), 2,4- and 2,6-toluene diisocyanate (TDI), triisocyanates and polymethylene poly(phenylene isocyanates) also known as polymeric or crude MDI and combinations thereof. C available 2,4- and 2,6-toluene diisocyanates include

Mondur® TDI.

In one embodiment, the polyisocyanate can be at least one mixture of 2,4-toluene diisocyanate and 2,6-toluene diisocyanate wherein 2,4-toluene diisocyanate is present in an amount of from 80 to 85 weight percent of the mixture and wherein 2,6-toluene diisocyanate is present in an amount of from 20 to 15 weight percent of the mixture.

The amount of polyisocyanate included in the polyurethane foam-forming composition relative to the amount of other materials in the polyurethane foam-forming composition is described in terms of "Isocyanate Index." "Isocyanate Index" refers to the actual amount of polyisocyanate used divided by the theoretically required stoichiometric amount of polyisocyanate required to react with all active hydrogen in polyurethane foam-forming composition multiplied by one hundred (100).

In one embodiment, the Isocyanate Index in the polyurethane foam-forming composition is from 60 to 300, more particularly from 70 to 200, even more particularly from 80 to 120.

The catalyst (c) for the production of the polyurethane foams herein can be a single catalyst or mixture of catalysts that can be used to catalyze the reactions of polyol and water with polyisocyanates to form polyurethane foam. It is common, but not required, to use both an organoamine and an organotin compound for this purpose. Other metal catalysts can be used in place of, or in addition to, organotin compound.

Representative examples of the catalyst (c) include, but are not limited to:

- tertiary amines such as bis(2,2'-dimethylamino)ethyl ether, trimethylamine, triethylenediamine, 1,8-diazabicyclo[5.4.0]undec-7-ene, triethylamine, N-methylmorpholine, N,N-ethylmorpholine, N,N-dimethylbenzylamine, N,N-dimethylethanolamine, N,N,N',N'-tetramethyl-1,3-butanediamine, pentamethyldipropylenetriamine, triethanolamine, triethylenediamine, 2-{[2-(2-dimethylaminoethoxy)ethyl]methylamino}ethanol, pyridine oxide;
- strong bases such as alkali and alkaline earth metal hydroxides, alkoxides, phenoxides;
- acidic metal salts of strong acids such as ferric chloride, stannous chloride, antimony trichloride, bismuth nitrate and chloride;
- chelates of various metals such as those which can be obtained from acetylacetone, benzoylacetone, trifluoroacetylacetone, ethyl acetoacetate, salicylaldehyde, cyclopentanone-2-carboxylate, acetylacetoneimine, bis-acetylaceone-alkylenediimines, salicylaldehydeimine, with various metals such as Be, Mg, Zn, Cd, Pb, Ti, Zr, Sn, As, Bi, Cr, Mo, Mn, Fe, Co, Ni, or such ions as $MoO_2$++, $UO_2$++;
- alcoholates and phenolates of various metals such as $Ti(OR)_4$, $Sn(OR)_4$, $Sn(OR)_2$, $Al(OR)_3$, wherein R is alkyl or aryl of from 1 to 12 carbon atoms, and reaction products of alcoholates with carboxylic acids, beta-diketones, and 2-(N,N-dialkylamino) alkanols, such as well known chelates of titanium obtained by this or equivalent procedures;
- salts of organic acids with a variety of metals such as alkali metals, alkaline earth metals, Al, Sn, Pb, Mn, Co, Bi, and Cu, including, for example, sodium acetate, potassium laurate, calcium hexanoate, stannous acetate, stannous octoate, stannous oleate, lead octoate, metallic driers such as manganese and cobalt naphthenate;
- organometallic derivatives of tetravalent tin, trivalent and pentavalent As, Sb, and Bi, and metal carbonyls of iron and cobalt; and
- combinations of two or more thereof.

In one embodiment, the catalyst (c) is an organotin compound that is a dialkyltin salt of a carboxylic acid, including the non-limiting examples of dibutyltin diacetate, dibutyltin dilaureate, dibutyltin maleate, dilauryltin diacetate, dioctyltin diacetate, dibutyltin-bis(4-methylaminobenzoate), dibuytyltindilaurylmercaptide, dibutyltin-bis(6-methylaminocaproate), and combinations of two or more thereof.

Similarly, in another embodiment there may be used trialkyltin hydroxide, dialkyltin oxide, dialkyltin dialkoxide, or dialkyltin dichloride, and combinations of two or more thereof can be employed. Non-limiting examples of these compounds include trimethyltin hydroxide, tributyltin hydroxide, trioctyltin hydroxide, dibutyltin oxide, dioctyltin oxide, dilauryltin oxide, dibutyltin-bis(isopropoxide) dibutyltin-bis(2-dimethylaminopentylate), dibutyltin dichloride, dioctyltin dichloride, and combinations of two or more thereof.

In one embodiment, the catalyst can be an organotin catalyst such as stannous octoate, dibutyltin dilaurate, dibutyltin diacetate, stannous oleate, or combinations of two or more thereof. In another embodiment, the catalyst can be an organoamine catalyst, for example, tertiary amine such as trimethylamine, triethylamine, triethylenediamine, bis(2,2-dimethylamino)ethyl ether, N-ethylmorpholine, diethylenetriamine, 1,8-diazabicyclo[5.4.0]undec-7-ene, or combinations of two or more thereof. In still another embodiment, the catalyst can include mixtures of tertiary amine and glycol, such as Niax® catalyst C-183 (Momentive Performance Materials, Inc.), stannous octoate, such as Niax® catalyst D-19 (Momentive Performance Materials, Inc.), or combinations of two or more thereof.

According to one embodiment of the present invention, the catalyst is an amine catalyst for the production of high resilience flexible slabstock and molded foams. These amine catalysts can be bis(N,N-dimethylaminoethyl)ether or 1,4-diazabicyclo[2.2.2] octane.

In another embodiment amine catalysts can include mixtures of tertiary amine and glycol, such as Niax® catalyst

C-183, stannous octoate, such as Niax® catalyst D-19 and combinations thereof, all available from Momentive Performance Materials.

The polyurethane foam-forming composition can include a blowing agent. The blowing agent can be one blowing agent of the physical and/or chemical type. Typical physical blowing agents include, but are not limited to methylene chloride, acetone, water or $CO_2$, which are used to provide expansion in the foaming process. A typical chemical blowing agent is water, which reacts with isocyanates in the foam, forming reaction mixture to produce carbon dioxide gas. These blowing agents possess varying levels of solubility or compatibility with the other components used in the formation of polyurethane foams. Developing and maintaining a good emulsification when using components with poor compatibility is critical to processing and achieving acceptable polyurethane foam quality.

EXAMPLES

Polyurethane foams were made using surfactants in accordance with the present technology and polyether carbonate polyols. Comparative examples using conventional surfactants and polyether carbonate polyols were also evaluated. The formulations are described in Table 1:

Table 1

| Foams | Ex 1 | Ex 2 | Ex 3 | Ex 4 | Ex 5 | Ex 6 |
|---|---|---|---|---|---|---|
| | Comp | Comp | Comp | | | |
| **Polyether Carbonate Polyol (Bayer)** | 70 | 70 | 70 | 70 | 70 | 70 |
| **Polyether Polyol Arcol 1108 (Bayer)** | 30 | 30 | 30 | 30 | 30 | 30 |
| **Water** | 4.5 | 4.5 | 4.5 | 4.5 | 4.5 | 4.5 |
| **Niax® Catalyst A-1** | 0.12 | 0.12 | 0.12 | 0.12 | 0.12 | 0.12 |
| **Niax® Catalyst Stannous Octoate** | 0.2 | 0.2 | 0.2 | 0.2 | 0.2 | 0.2 |
| **Silicone A (Tegostab BF2370)** | 1.8 | 1 | 0.6 | | | |
| **Silicone B** | | | | 1.8 | 1 | 0.6 |
| **TDI Index** | 108 | 108 | 108 | 108 | 108 | 108 |
| **Results** | | | | | | |
| **Rise Time (sec)** | 90 | 84 | 80 | 98 | 83 | 90 |
| **Final Height (cm)** | 23.8 | 24.1 | - | 26.1 | 26.2 | 25.8 |
| **Settling (%)** | 0.0 | 3.6 | - | 0.0 | 0.0 | 0.0 |
| **Density (kg/m3)** | 22.8 | 23.3 | - | 21.6 | 21.1 | 21.4 |
| **CFD 40% (kPa)** | 5.0 | 5.1 | - | 4.4 | 4.4 | 4.4 |
| **Comfort factor** | 2.1 | 2.1 | - | 2.2 | 2.1 | 2.1 |
| **Resilience (%)** | 22 | 28 | - | 23 | 25 | 25 |
| **Porosity (L/min)** | 5 | 67 | - | 20 | 59 | 96 |
| **Comments** | | | collapse | | | |

Table 2

| Foams | Ex 7 | Ex 8 | Ex 9 | Ex 10 | Ex 11 | Ex. 12 | Ex. 13 |
|---|---|---|---|---|---|---|---|
| | Comp | | Comp | Comp | Comp | | |
| **Polyether Carbonate Polyol (Bayer)** | 100 | 100 | 100 | 100 | 100 | 100 | 100 |
| **Polyether Polyol Arcol 1108 (Bayer)** | | | | | | | |
| **Water** | 4.5 | 4.5 | 4.5 | 4.5 | 4.5 | 4.5 | 4.5 |
| **Niax® Catalyst A-1** | 0.12 | 0.12 | 0.12 | 0.12 | 0.12 | 0.12 | 0.12 |

(continued)

| Foams | Ex 7 | Ex 8 | Ex 9 | Ex 10 | Ex 11 | Ex. 12 | Ex. 13 |
|---|---|---|---|---|---|---|---|
| | Comp | | Comp | Comp | Comp | | |
| **Niax® Catalyst Stannous Octoate** | 0.2 | 0.2 | 0.2 | 0.2 | 0.2 | 0.2 | 0.2 |
| **Silicone A (Tegostab BF2370)** | 1 | | | | | | |
| **Silicone B** | | 1 | | | | 0.65 | |
| **Silicone C** | | | 1 | | | | |
| **Silicone D** | | | | 1 | | | |
| **Silicone E** | | | | | 1 | | |
| **Silicone F** | | | | | | | 0.65 |
| **TDI Index** | 108 | 108 | 108 | 108 | 108 | 108 | 108 |
| **Results** | | | | | | | |
| **Rise Time (sec)** | 87 | 98 | 87 | 84 | 92 | 86 | 86 |
| **Final Height (cm)** | - | 23.4 | - | - | - | 24.5 | 24.4 |
| **Settling (%)** | - | 0.8 | - | - | - | 3.9 | 3.2 |
| **Density (kg/m3)** | - | 23.6 | - | - | - | 22.8 | 23.1 |
| **CFD 40% (kPa)** | - | 5.4 | - | - | - | 5.9 | 6.1 |
| **Comfort factor** | - | 2.2 | - | - | - | 2.03 | 2.04 |
| **Resilience (%)** | - | 16.7 | - | - | - | - | - |
| **Porosity (L/min)** | - | 27 | - | - | - | 47 | 24 |
| **Comments** | collapse | | collapse | collapse | collapse | | |

- Silicone A: Tegostab BF2370 is from Evonik.
- Silicone B (present invention): Silicone polyether surfactant with two polyether substituents - 4000 MW polyether containing 40% EO, and 550 MW polyether containing 100% EO.
- Silicone C: Silicone polyether surfactant with two polyether substituents - 4000 MW polyether containing 40% EO, and 1500 MW polyether containing 40% EO.
- Silicone D: Silicone polyether surfactant with two polyether substituents - 4000 MW polyether containing 40% EO, and 1500 MW polyether containing 40% EO.
- Silicone E: Silicone polyether surfactant with two polyether substituents - 4000 MW polyether containing 40% EO, and 550 MW polyether containing 40% EO.
- Silicone F (present invention): Silicone polyether surfactant with two polyether substituents - 4000 MW polyether containing 40% EO, and 750 MW polyether containing 75% EO.

Examples 1-6 are for foam formulations using a combination of 70% by weight polyether carbonate polyol and 30% by weight petroleum based polyol. Examples 4 - 6 use Silicone B (a surfactant in accordance with the present technology). As shown, Silicone B is the only one that provides foam stabilization and typical foam properties at three different use levels (0.6, 1.0, and 1.8 parts per hundred parts polyol, pphp). Silicone B provides good foam stabilization as reflected by the higher Final Height values, and 0 % Settling. Silicone B provides foam with adequate porosity values. By comparison, Silicone A collapses foam at 0.6 pphp (Example 3), and has increased Settling % at 1.0 pphp (Example 2) indicating poor stabilization of the foam. Silicone A does not provide adequate stabilization as reflected by lower Final Height values in Examples 1 and 2. At increased use levels, Silicone A provides foam with very low porosity (while higher porosity is desired in flexible foam).

Examples 7-13 are foam formulations using 100% by weight polyether carbonate polyol. In these formulations, only the surfactants in accordance with aspects of the invention, e.g., Silicones B and F, provided foam stabilization with adequate foam properties. The other surfactants that were tested did not provide adequate foam stabilization, resulting in foam collapse.

Examples 12 and 13 compare inventive compositions employing silicone surfactants having different ethylene

oxide concentrations in the low molecular weight polyether pendent groups. Example 12 employs a surfactant with an EO content of 100% in the low molecular weight polyether substituent. Example 13 employs a surfactant with an EO content of 75% on the low molecular weigh polyether substituent. As shown in Table 2, the surfactant with the EO content of 75% still provides a foam with excellent properties.

Foam compositions were also evaluated with different water content. Using lower water content in the foam composition allows for changing or controlling the foam density. Table 3 shows the results for foams using lower water content.

Table 3

| **Foams** | Ex 14 | Ex 15 | Ex 16 | Ex 17 | Ex 18 | Ex 19 | Ex 20 | Ex 21 | Ex 22 |
|---|---|---|---|---|---|---|---|---|---|
| | Com p | | Com p | Com p | | Com p | Com p | - | Comp |
| **Polyether Carbonate Polyol (Bayer)** | 70 | 70 | 70 | 70 | 70 | 70 | 70 | 70 | 70 |
| **Polyether Polyol Arcol 1108 (Bayer)** | 30 | 30 | 30 | 30 | 30 | 30 | 30 | 30 | 30 |
| **Water** | 4.5 | 4.5 | 4.5 | 4.0 | 4.0 | 4.0 | 3.5 | 3.5 | 3.5 |
| **Niax® Catalyst B-18** | 0.15 | 0.15 | 0.15 | 0.15 | 0.15 | 0.15 | 0.15 | 0.15 | 0.15 |
| **Niax® Catalyst Stannous Octoate** | 0.18 | 0.18 | 0.18 | 0.18 | 0.18 | 0.18 | 0.18 | 0.18 | 0.18 |
| **Silicone A (Tegostab BF2370)** | 0.8 | | | 1 | | | 0.8 | | |
| **Silicone B (present invention)** | | 0.8 | | | 1 | | | 0.8 | |
| **Silicone E** | | | 0.8 | | | 1 | | | 0.8 |
| **TDI Index** | 106 | 106 | 106 | 106 | 106 | 106 | 106 | 106 | 106 |
| **Results** | | | | | | | | | |
| **Rise Time (sec)** | 84 | 90 | 81 | 88 | 95 | 88 | 92 | 100 | 87 |
| **Final Height (cm)** | 20.1 | 22.4 | - | 20.3 | 21.8 | 18.6 | 18.9 | 20.6 | 18 |
| **Settling (%)** | 4.7 | 0 | - | 2.4 | 0 | 6.1 | 1.6 | 0 | 5.8 |
| **Density (kg/m3)** | 23.9 | 22.1 | - | 26 | 24.4 | 26.4 | 28.9 | 26.7 | 29.2 |
| **CFD 40% (kPa)** | 4.6 | 3.6 | - | 4.6 | 4.2 | 4.5 | 4.4 | 3.9 | 4.8 |
| **Comfort factor** | 2.1 | 2.3 | - | 2.2 | 2.2 | 2.2 | 2.2 | 2.2 | 2.1 |
| **Resilience (%)** | 29 | 26 | - | 28 | 25 | 28 | 29 | 25 | 28 |
| **Porosity (L/min)** | 101 | 91 | - | 93 | 85 | 91 | 73 | 70 | 52 |
| **Comments** | | | colla pse | | | | | | |

- Silicone A: Tegostab BF2370 is from Evonik.
- Silicone B (present invention): Silicone polyether surfactant with two polyether substituents - 4000 MW polyether containing 40% EO, and 550 MW polyether containing 100% EO.
- Silicone E: Silicone polyether surfactant with two polyether substituents - 4000 MW polyether containing 40% EO, and 550 MW polyether containing 40% EO content.

As shown in Table 3, even using different water levels in the compositions, foams employing the present surfactant still exhibit good properties in terms of density, porosity, resilience, etc. while still employing a relatively high concentration of polycarbonate polyol.

## Claims

1. A foam forming composition comprising:

(a) a polyol comprising a polyether carbonate polyol;
(b) an organic polyisocyanate or polyisocyanate prepolymer;
(c) a catalyst for the production of polyurethane foams;
(d) a blowing agent; and
(e) a silicone surfactant, the silicone surfactant comprising a first set of polyether pendant groups having a first molecular weight, and a second set of polyether pendent groups having a second molecular weight, the second molecular weight being lower than the first molecular weight, wherein the second set of polyether pendant groups have an ethylene oxide content of 70 weight percent or greater of the alkylene oxide content of the polyether.

2. The foam forming composition of claim 1, wherein the second set of polyether pendant groups have an ethylene oxide content of 70% to 100 weight percent of the alkylene oxide content of the polyether.

3. The foam forming composition of claim 1, wherein the second set of polyether pendant groups have an ethylene oxide content of 100 weight percent of the alkylene oxide content of the polyether.

4. The foam forming composition of any of claims 1-3, wherein the second set of polyether pendant groups have a blend average molecular weight of from 130 to 1000 grams/mole.

5. The foam forming composition of any of claims 1-4, wherein the second set of polyether pendant groups have a blend average molecular weight of from 400 to 600 grams/mole.

6. The foam forming composition of any of claims 1-5, wherein the silicone surfactant is of the formula:

$$MD_xD'_yM$$

wherein M is independently $R(CH_2)_2\ SiO_{½}$- or $(CH_3)_3SiO_{½}$-; D is $-O_{½}Si(CH_3)_2O_{½}$-; D' is chosen from a group of the formula:

$$-O_{½}Si(CH_3)R^1O_{½}-;$$

and/or

$$-O_{½}Si(CH_3)R^2O_{½}-$$

where $R^1$ and $R^2$ are polyalkylene oxide polyethers of the formula

$$-B-C_nH_{2n}O-(C_2H_4O)_e-(C_3H_6O)_f-Z$$

where:

$R^1$ has a blend average molecular weight in the range of from 1500 to 6000 grams/mole; n is 3-4; e is a number such that the ethylene oxide (EO) is from 30 to 50 weight percent of the alkylene oxide content of the polyether; f is a number such that the propylene oxide residues constitute 50 to 70 weight percent of the alkylene oxide content of the polyether;
$R^2$ has a blend average molecular weight in the range of from 130 to 1000 grams/mole; n is 3-4; e is a number such that the ethylene oxide content is from 70 to 100 weight percent of the alkylene oxide content of the polyether; f is a number such that the propylene oxide content is from 0 to 30 weight percent of the alkylene oxide content of the polyether;
R is alkyl, aryl or R', where R' comprises an acetoxy capped polyether B is derived from a moiety capable of undergoing hydrosilation;
Z is independently chosen from hydrogen, a $C_1$-$C_8$ alkyl or aralkyl moietie, $-C(O)Z^1$, $-C(O)OZ^1$, and $-C(O)NHZ^1$, where $Z^1$ represents mono-functional $C_1$-$C_8$ alkyl or $C_6$-$C_{12}$ aryl moieties;
x is 40 to 150; y is 5 to 40; $x/y \leqq 15$; and

D' comprises at least one $-O_{1/2}Si(CH_3)R^2O_{1/2}-$ group.

**7.** The foam forming composition of any of claims 1-5, wherein the silicone surfactant is a silicone polymer of the formula:

$$R^3\text{-}Si(CH_3)_2O\text{-}(Si(CH_3)_2O\text{-})_x\text{-}(SiCH_3R^4O\text{-})_a\text{-}(SiCH_3R^5O\text{-})_b\text{-}(SiCH_3R^6O\text{-})_c\text{-}Si(CH_3)_2\text{-}R^3$$

where $R^4$, $R^5$, and $R^6$ are polyalkylene oxide polyethers of the formula

$$\text{-}B\text{-}C_nH_{2n}O\text{-}(C_2H_4O)_e\text{-}(C_3H_6O)_f\text{-}(C_4H_8O)_g\text{-}Z,$$

$R^4$ has a blend average molecular weight in the range of from 3000 to 6000 grams/mole and ethylene oxide (EO) is from 20 to 60 weight percent of the alkylene oxide content of the polyether;
$R^5$ has a blend average molecular weight in the range of from 1100 to 2900 grams/mole and ethylene oxide is from 20 to 60 weight percent of the alkylene oxide content of the polyether;
$R^6$ has a blend average molecular weight in the range of from 130 to 1000 grams/mole and ethylene oxide is from 70 to 100 weight percent of the alkylene oxide content of the polyether;
B is derived from a moiety capable of undergoing hydrosilation;
Z is selected from the group consisting of hydrogen, $C_1$-$C_8$ alkyl or aralkyl moieties, - $C(O)Z^1$, $-C(O)OZ^1$, and $-C(O)NHZ^1$, where $Z^1$ represents mono-functional $C_1$-$C_8$ alkyl or aryl moieties;
each $R^3$ is independently chosen from an alkyl, an aryl, an aralkyl, $R^4$, $R^5$, and $R^6$;
x is 40 to 150;
y is 5 to 40 and equals a+b+c, where b may be 0, c is greater than 0, and a+b > 0; $x/y \leq 15$; $n \leq 4$; and e, f, and g are independently selected to have any value such that the defined weight percent of EO and molecular weight required by the polyether are met.

**8.** The foam forming composition of any claims 1-7, wherein the polyol (a) comprises the polyether carbonate polyol in an amount of 50 % or greater by weight of the polyol.

**9.** The foam forming composition of any of claims 1-7, wherein the polyol (a) comprises the polyether carbonate polyol in an amount of 70 % or greater by weight of the polyol.

**10.** The foam forming composition of any of claims 1-7, wherein the polyol (a) comprises the polyether carbonate polyol in an amount of from 60 wt.% to 90 % by weight of the polyol.

**11.** The foam forming composition of any of claims 1-7, wherein the polyol (a) comprises the polyether carbonate polyol in an amount of 100 % by weight of the polyol.

**12.** The foam forming composition of any of claims 1-11 comprising the surfactant (e) in an amount of 0.1 to 5 parts per hundred parts polyol.

**13.** A process for producing a polyurethane foam comprising reacting the foam forming composition of any of claims 1-12.

**14.** A polyurethane foam formed from the foam forming compositions of any of claims 1-12.

## Patentansprüche

**1.** Eine schaumbildende Zusammensetzung, die umfasst:

(a) ein Polyol, das ein Polyethercarbonat-Polyol umfasst;
(b) ein organisches Polyisocyanat oder Polyisocyanat-Präpolymer;
(c) einen Katalysator zur Herstellung eines Polyurethanschaums;
(d) ein Treibmittel; und
(e) ein Silikontensid, wobei das Silikontensid eine erste Gruppe von anhängenden Polyethergruppen mit einem ersten Molekulargewicht, und eine zweite Gruppe von anhängenden Polyethergruppen mit einem zweiten Molekulargewicht umfasst, wobei das zweite Molekulargewicht niedriger als das erste Molekulargewicht ist, wobei die zweite Gruppe von anhängenden Polyethergruppen einen Ethylenoxidgehalt von 70 Gewichts-% oder mehr des Alkylenoxidgehalts des Polyethers aufweist.

2. Die schaumbildende Zusammensetzung gemäß Anspruch 1, wobei die zweite Gruppe der anhängenden Polyethergruppen einen Ethylenoxidgehalt von 70 % bis 100 Gewichtsprozent des Alkylenoxidgehalts des Polyethers aufweist.

3. Die schaumbildende Zusammensetzung gemäß Anspruch 1, wobei die zweite Gruppe der anhängenden Polyethergruppen einen Ethylenoxidgehalt von 100 Gewichtsprozent des Alkylenoxidgehalts des Polyethers aufweist.

4. Die schaumbildende Zusammensetzung gemäß einem der Ansprüche 1-3, wobei die zweite Gruppe der anhängenden Polyethergruppen ein Mischungsmittel des Molekulargewichts von 130 bis 1000 Gramm/Mol aufweist.

5. Die schaumbildende Zusammensetzung gemäß einem der Ansprüche 1-4, wobei die zweite Gruppe der anhängenden Polyethergruppen ein Mischungsmittel des Molekulargewichts von 400 bs 600 Gramm/Mol aufweist.

6. Die schaumbildende Zusammensetzung gemäß einem der Ansprüche 1-5, wobei das Silikontensid die Formel aufweist:

$$MDxD'yM$$

worin M in unabhängiger Weise $R(CH_2)_2SiO_{1/2}$- oder $(CH_3)_3SiO_{1/2}$- ist; D $-O_{1/2}Si(CH_3)_2O_{1/2}$-ist; D' aus der Gruppe ausgewählt ist, die die Formel aufweist:

$$-O_{1/2}Si(CH_3)R^1O_{1/2}-;$$

und/oder

$$-O_{1/2}Si(CH_3)R^2O_{1/2}-$$

worin $R^1$ und $R^2$ Polyalkylenoxidpolyether mit der Formel

$$-B-C_nH_{2n}O-(C_2H_4O)_e-(C_3H_6O)_f-Z$$

sind,
worin

$R^1$ ein Mischungsmittel des Molekulargewichts in dem Bereich von 1500 bis 6000 Gramm/Mol aufweist; n 3-4 ist; e eine solche Zahl ist, dass das Ethylenoxid (EO) von 30 bis 50 Gewichtsprozent des Alkylenoxidgehalts des Polyethers ausmacht; f eine solche Zahl ist, dass die Propylenoxidreste 50 bis 70 Gewichtsprozent des Alkylenoxidgehalts des Polyethers bilden;
$R^2$ ein Mischungsmittel des Molekulargewichts in dem Bereich von 130 bis 1000 Gramm/Mol aufweist; n 3-4 ist; e eine solche Zahl ist, dass der Ethylenoxidgehalt von 70 bis 100 Gewichtsprozent des Alkylenoxidgehalts des Polyethers ausmacht; f eine solche Zahl ist, dass der Propylenoxidgehalt von 0 bis 30 Gewichtsprozent des Alkylenoxidgehalts des Polyethers ausmacht;
R ein Alkyl, Aryl oder R' ist, wobei R' einen Acetoxy-verkappten Polyether umfasst
B von einer Gruppe abgeleitet ist, die in der Lage ist, einer Hydrosilylierung unterzogen zu werden;
Z in unabhängiger Weise aus Wasserstoff, einer $C_1$-$C_8$-Alkyl- oder Aralkylgruppe, $-C(O)Z^1$, $-C(O)OZ^1$, und $-C(O)NHZ^1$ ausgewählt ist, wobei $Z^1$ monofunktionale $C_1$-$C_8$-Alkyl- oder $C_6$-$C_{12}$-Arylgruppen darstellt;
x 40 bis 150 ist; y 5 bis 40 ist; $x/y \leq 15$ ist; und
D' mindestens eine $-O_{1/2}Si(CH_3)R^2O_{1/2}$- -Gruppe umfasst.

7. Die schaumbildende Zusammensetzung gemäß einem der Ansprüche 1-5, wobei es sich bei dem Silikontensid um ein Silikonpolymer der Formel:

$$R^3-Si(CH_3)_2O-(Si(CH_3)_2O-)_x-(SiCH_3R^4O-)_a-(SiCH_3R^5O-)_b-(SiCH_3R^6O-)_c-Si(CH_3)_2-R^3$$

worin $R^4$, $R^5$ und $R^6$ Polyalkylenoxidpolyether der Formel

$$-B-C_nH_{2n}O-(C_2H_4O)_e-(C_3H_6O)_f-(C_4H_8O)_g-Z \text{ sind,}$$

$R^4$ ein Mischungsmittel des Molekulargewichts in dem Bereich von 3000 bis 6000 Gramm/Mol aufweist und Ethylenoxid (EO) von 20 bis 60 Gewichtsprozent des Alkylenoxidgehalts des Polyethers ausmacht;
$R^5$ ein Mischungsmittel des Molekulargewichts in dem Bereich von 1100 bis 2900 Gramm/Mol aufweist und Ethylenoxid von 20 bis 60 Gewichtsprozent des Alkylenoxidgehalts des Polyethers ausmacht;
$R^6$ ein Mischungsmittel des Molekulargewichts in dem Bereich von 130 bis 1000 Gramm/Mol aufweist und Ethylenoxid von 70 bis 100 Gewichtsprozent des Alkylenoxidgehalts des Polyethers ausmacht;
B von einer Gruppe abgeleitet ist, die in der Lage ist, einer Hydrosilylierung unterzogen zu werden;
Z aus der Gruppe ausgewählt ist, die aus Wasserstoff, $C_1$-$C_8$-Alkyl- oder Aralkylgruppen, -C(O)$Z^1$, -C(O)O$Z^1$, und -C(O)NH$Z^1$ besteht, worin $Z^1$ monofunktionelle $C_1$-$C_8$-Alkyl- oder Arylgruppen darstellt;
jedes $R^3$ in unabhängiger Weise aus einem Alkyl, einem Aryl, einem Aralkyl, $R^4$, $R^5$ und $R^6$ ausgewählt ist;
x 40 bis 150 ist;
y 5 bis 40 und gleich a+b+c ist, worin b 0 sein kann, c größer als 0 ist, und a+b > 0 ist; $x/y \leq 15$ ist; $n \leq 4$ ist; und e, f und g in unabhängiger Weise so ausgewählt sind, dass sie einen solchen beliebigen Wert haben, dass der definierte Gewichtsprozentwert von EO und das von dem Polyether benötigte Molekulargewicht erreicht werden.

**8.** Die schaumbildende Zusammensetzung gemäß einem der Ansprüche 1-7, wobei das Polyol (a) das Polyethercarbonatpolyol in einer Menge von 50 oder mehr Gewichts-% des Polyols umfasst.

**9.** Die schaumbildende Zusammensetzung gemäß einem der Ansprüche 1-7, wobei das Polyol (a) das Polyethercarbonatpolyol in einer Menge von 70 oder mehr Gewichts-% des Polyols umfasst.

**10.** Die schaumbildende Zusammensetzung gemäß einem der Ansprüche 1-7, wobei das Polyol (a) das Polyethercarbonatpolyol in einer Menge von 60 Gewichts-% bis 90 Gewichts-% des Polyols umfasst.

**11.** Die schaumbildende Zusammensetzung gemäß einem der Ansprüche 1-7, wobei das Polyol (a) das Polyethercarbonatpolyol in einer Menge von 100 Gewichts-% des Polyols umfasst.

**12.** Die schaumbildende Zusammensetzung gemäß einem der Ansprüche 1-11, die das Tensid (e) in einer Menge von 0,1 bis 5 Teilen pro Hundert Teile Polyol umfasst.

**13.** Ein Verfahren zur Herstellung eines Polyurethanschaums, das das Zur-Reaktion-Bringen der schaumbildenden Zusammensetzung gemäß einem der Ansprüche 1-12 umfasst.

**14.** Ein Polyurethanschaum, der aus den schaumbildenden Zusammensetzungen gemäß den Ansprüchen 1-12 gebildet wird.

## Revendications

**1.** Composition de formation de mousse comprenant :

(a) un polyol comprenant un polyol de polyéthercarbonate;
(b) un prépolymère de polyisocyanate ou de polyisocyanate organique ;
(c) un catalyseur pour la production de mousses de polyuréthane;
(d) un agent gonflant ; et
(e) un tensioactif à base de silicone, le tensioactif à base de silicone comprenant un premier ensemble de groupes polyéther pendants ayant un premier poids moléculaire, et un deuxième ensemble de groupes polyéther pendants ayant un deuxième poids moléculaire, le deuxième poids moléculaire étant inférieur au premier poids moléculaire, où le deuxième ensemble de groupes polyéther pendants ont une teneur en oxyde d'éthylène supérieure ou égale à 70 pour cent en poids de la teneur en oxyde d'alkylène du polyéther.

**2.** Composition de formation de mousse de la revendication 1, dans laquelle le deuxième ensemble de groupes polyéther pendants ont une teneur en oxyde d'éthylène comprise entre 70% et 100 pour cent en poids de la teneur en oxyde d'alkylène du polyéther.

**3.** Composition de formation de mousse de la revendication 1, dans laquelle le deuxième ensemble de groupes

polyéther pendants ont une teneur en oxyde d'éthylène de 100 pour cent en poids de la teneur en oxyde d'alkylène du polyéther.

**4.** Composition de formation de mousse de l'une des revendications 1 à 3, dans laquelle le deuxième ensemble de groupes polyéther pendants ont un poids moléculaire moyen en mélange allant de 130 à 1000 grammes/mole.

**5.** Composition de formation de mousse de l'une des revendications 1 à 4, dans laquelle le deuxième ensemble de groupes polyéther pendants ont un poids moléculaire moyen en mélange allant de 400 à 600 grammes/mole.

**6.** Composition de formation de mousse de l'une des revendications 1 à 5, dans laquelle le tensioactif à base de silicone est de formule :

$$MD_xD'_yM$$

où M représente indépendamment $R(CH_2)_2SiO_{1/2}$- ou $(CH_3)_3SiO_{1/2}$-; D représente $-O_{1/2}Si(CH_3)_2O_{1/2}-$ ; D' est choisi dans un groupe de formule :

$$-O_{1/2}Si(CH_3)R^1O_{1/2}- \;;$$

et/ou

$$-O_{1/2}Si(CH_3)R^2O_{1/2}-$$

où $R^1$ et $R^2$ sont des polyéthers d'oxyde de polyalkylène de formule

$$-B-C_nH_{2n}O-(C_2H_4O)_e-(C_3H_6O)_f-Z$$

où :

$R^1$ a un poids moléculaire moyen en mélange se trouvant dans la plage allant de 1500 à 6000 grammes/mole ; n est de 3 à 4 ; e est un nombre tel que l'oxyde d'éthylène (EO) constitue 30 à 50 pour cent en poids de la teneur en oxyde d'alkylène du polyéther ; f est un nombre tel que les résidus d'oxyde de propylène constituent 50 à 70 pour cent en poids de la teneur en oxyde d'alkylène du polyéther ;
$R^2$ a un poids moléculaire moyen en mélange se trouvant dans la plage allant de 130 à 1000 grammes/mole ; n est de 3 à 4 ; e est un nombre tel que la teneur en oxyde d'éthylène est comprise entre 70 et 100 pour cent en poids de la teneur en oxyde d'alkylène du polyéther ; f est un nombre tel que la teneur en oxyde de propylène est comprise entre 0 et 30 pour cent en poids de la teneur en oxyde d'alkylène du polyéther ;
R est un alkyle, un aryle ou R', où R' comprend un polyéther à coiffe acétoxy
B est dérivé d'un fragment capable de subir une hydrosilation ;
Z est indépendamment choisi parmi un hydrogène, un fragment aralkyle ou alkyle en $C_1$ à $C_8$, $-C(O)Z^1$, $-C(O)OZ^1$ et $-C(O)NHZ^1$, où $Z^1$ représente des fragments alkyle en $C_1$ à $C_8$ ou aryle en $C_6$ à $C_{12}$ monofonctionnels ;
x est de 40 à 150 ; y est de 5 à 40 ; $x/y \leqq 15$ ; et
D' comprend au moins un groupe $-O_{1/2}Si(CH_3)R^2O_{1/2}-$.

**7.** Composition de formation de mousse de l'une des revendications 1 à 5, dans laquelle le tensioactif à base de silicone est un polymère de silicone de formule :

$$R^3-Si(CH_3)_2O-(Si(CH_3)_2O-)_x-(SiCH_3R^4O-)_a-(SiCH_3R^5O-)_b-(SiCH_3R^6O-)_c-Si(CH_3)_2-R^3$$

où $R^4$, $R^5$ et $R^6$ sont des polyéthers d'oxyde de polyalkylène de formule

$$-B-C_nH_{2n}O-(C_2H_4O)_e-(C_3H_6O)_f-(C_4H_8O)_g-Z,$$

$R^4$ a un poids moléculaire moyen en mélange se trouvant dans la plage allant de 3000 à 6000 grammes/mole et l'oxyde d'éthylène (EO) constitue 20 à 60 pour cent en poids de la teneur en oxyde d'alkylène du polyéther ;
$R^5$ a un poids moléculaire moyen en mélange se trouvant dans la plage allant de 1100 à 2900 grammes/mole et l'oxyde d'éthylène constitue 20 à 60 pour cent en poids de la teneur en oxyde d'alkylène du polyéther ;
$R^6$ a un poids moléculaire moyen en mélange se trouvant dans la plage allant de 130 à 1000 grammes/mole

et l'oxyde d'éthylène constitue 70 à 100 pour cent en poids de la teneur en oxyde d'alkylène du polyéther ;
B est dérivé d'un fragment capable de subir une hydrosilation ;
Z est choisi dans le groupe constitué par un hydrogène, des fragments aralkyle ou alkyle en $C_1$ à $C_8$, -C(O)$Z^1$, -C(O)O$Z^1$, et -C(O)NH$Z^1$, où $Z^1$ représente des fragments aryle ou alkyle en $C_1$ à $C_8$ monofonctionnels ;
chaque $R^3$ est indépendamment choisi parmi un alkyle, un aryle, un aralkyle, $R^4$, $R^5$ et $R^6$;
x est de 40 à 150 ;
y est de 5 à 40 et est égal à a + b + c, où b peut être égal à 0, c est supérieur à 0 et a+b > 0 ; $x/y \leq 15$ ; $n \leq 4$ ; et e, f et g sont indépendamment choisis pour avoir n'importe quelle valeur telle que le pourcentage en poids défini d'EO et le poids moléculaire requis par le polyéther sont atteints.

**8.** Composition de formation de mousse de l'une des revendications 1 à 7, dans laquelle le polyol (a) comprend le polyol de polyéthercarbonateen une quantité supérieure ou égale à 50% en poids du polyol.

**9.** Composition de formation de mousse de l'une des revendications 1 à 7, dans laquelle le polyol (a) comprend le polyol de polyéthercarbonate en une quantité supérieure ou égale à 70% en poids du polyol.

**10.** Composition de formation de mousse de l'une des revendications 1 à 7, dans laquelle le polyol (a) comprend le polyol de polyéthercarbonate en une quantité allant de 60% en poids à 90% en poids du polyol.

**11.** Composition de formation de mousse de l'une des revendications 1 à 7, dans laquelle le polyol (a) comprend le polyol de polyéthercarbonate en une quantité de 100% en poids du polyol.

**12.** Composition de formation de mousse de l'une des revendications 1 à 11, comprenant le tensioactif (e) en une quantité allant de 0,1 à 5 partie(s) pour cent parties de polyol.

**13.** Procédé de production d'une mousse de polyuréthanne comprenant la réaction de la composition de formation de mousse de l'une des revendications 1 à 12.

**14.** Mousse de polyuréthanne formée à partir des compositions de formation de mousse de l'une des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5789454 A
- EP 1501889 A
- EP 1359177 A